# EUROPÄISCHE PATENTANMELDUNG

(11) **EP 2 330 574 A1**
(43) Veröffentlichungstag der Anmeldung: **08.06.2011**
(21) Anmeldenummer: 09015030.1
(22) Anmeldetag: 04.12.2009
(51) Int. Cl.: G07G 1/12, G06Q 20/00, G06F 21/00

(54) **Kassensystem**

(71) Anmelder: Scheidt & Bachmann GmbH, 41238 Mönchengladbach (DE)
(72) Erfinder: Miller, Norbert, 41063 Mönchengladbach (DE); Nennen, Roland, 41069 Mönchengladbach (DE)
(74) Vertreter: Stenger, Watzke & Ring

(57) **Zusammenfassung**

Die vorliegende Erfindung betrifft ein Kassensystem, eingerichtet für die Durchführung einer bargeldlosen Zahlungstransaktion mittels eines bargeldlosen Zahlungsmittels, mit einer Kasse sowie mit einer mit der Kasse über eine Kommunikationsverbindung verbundenen Leseeinheit für das bargeldlose Zahlungsmittel. Die Erfindung betrifft ferner ein Verfahren zur bargeldlosen Zahlung an einer Kasse eines Kassensystems, wobei eine Leseeinheit für ein bargeldloses Zahlungsmittel mit der Kasse in Kommunikationsverbindung steht, die Leseeinheit zwecks Durchführung einer Zahlungstransaktion in Kommunikationsverbindung mit dem bargeldlosen Zahlungsmittel tritt, Daten von dem Zahlungsmittel eingelesen werden und an die Kasse übermittelt werden.

Der Erfindung liegt die **Aufgabe** zugrunde, ein gattungsgemäßes Kassensystem beziehungsweise Verfahren zur bargeldlosen Zahlung derart weiterzubilden, dass die Flexibilität insbesondere im Hinblick auf kundenspezifische Ausführungen einer Kasse erhöht werden kann.

Kassensystemseitig schlägt die Erfindung als **Lösung** vor, dass das Kassensystem eine Verschlüsselungseinheit (3), mittels der von der Leseeinheit (1) an die Kasse (5) zu übermittelnde Daten verschlüsselt werden, so dass die Daten in der Kasse (5) zumindest teilweise informationstechnisch geschützt vorliegen, sowie eine Entschlüsselungseinheit (6) aufweist, mittels der verschlüsselte, von der Kasse (5) an eine Zentrale (7) weiterzuleitende Daten entschlüsselt werden.

## Beschreibung

Die vorliegende Erfindung betrifft ein Kassensystem, eingerichtet für die Durchführung einer bargeldlosen Zahlungstransaktion mittels eines bargeldlosen Zahlungsmittels, mit einer Kasse sowie mit einer mit der Kasse über eine Kommunikationsverbindung verbundenen Leseeinheit für das bargeldlose Zahlungsmittel. Die Erfindung betrifft ferner ein Verfahren zur bargeldlosen Zahlung an einer Kasse eines Kassensystems, wobei eine Leseeinheit für ein bargeldloses Zahlungsmittel mit der Kasse in Kommunikationsverbindung steht, die Leseeinheit zwecks Durchführung einer Zahlungstransaktion in Kommunikationsverbindung mit dem bargeldlosen Zahlungsmittel tritt, Daten von dem Zahlungsmittel eingelesen werden und an die Kasse übermittelt werden.

Gattungsgemäße Kassensysteme sowie auch Verfahren zur bargeldlosen Zahlung sind aus dem Stand der Technik hinreichend bekannt, so dass es eines gesonderten druckschriftlichen Nachweises nicht bedarf. Ein gattungsgemäßes Kassensystem umfasst eine oder mehrere Kassen. Die Kasse wird für die Durchführung einer Zahlungstransaktion unter Zuhilfenahme einer Kreditkarte oder einer EC-Karte eingesetzt, bei der ein Nutzer eine Ware und/oder eine Dienstleistung gegen Zahlung eines Kaufpreises erwirbt. Mit der Zahlungstransaktion entrichtet der Nutzer den Kaufpreis. Ein Lesegerät ist dafür ausgebildet, die Kreditkarte in einem Aufnahmeschlitz aufzunehmen und transaktionsrelevante Daten der Kreditkarte beziehungsweise EC-Karte zu erfassen. Das Lesegerät steht über ein Kommunikationskabel mit der Kasse des Kassensystems in Kommunikationsverbindung und übermittelt die transaktionsrelevanten Daten an die Kasse des Kassensystems. Die Kasse selbst steht über eine Telefonverbindung mit einer Kreditkartenzentrale beziehungsweise EC-Kartenzentrale in Kommunikation. Die Kasse führt die Zahlungstransaktion durch und übermittelt transaktionsrelevante Daten an die Zentrale. Die Zentrale prüft die Gültigkeit der Kreditkarte oder EC-Karte anhand der übermittelten Daten und gibt eine entsprechende Meldung an die Kasse des Kassensystems über die Telefonleitung zurück. Ist die Kreditkarte beziehungsweise die EC-Karte gültig und die vorzunehmende Zahlungstransaktion zulässig, wird die Zahlungstransaktion aufgrund einer entsprechenden Meldung der Zentrale an die Kasse abgeschlossen. Ist die Kreditkarte beziehungsweise die EC-Karte oder auch die von der Kasse gemeldete Zahlungstransaktion ungültig beziehungsweise unzulässig, erfolgt eine entsprechende Meldung über die Telefonleitung an die Kasse des Kassensystems. Die weitere Ausführung der Zahlungstransaktion wird sodann abgebrochen.

Damit eine sichere und zuverlässige Verarbeitung der transaktionsrelevanten Daten erreicht werden kann, ist ein spezieller Aufbau der Kasse sowie auch des Kassensystems erforderlich, der es unmöglich macht beziehungsweise erheblich erschwert, Manipulationen an den Daten während der Ausführung der Zahlungstransaktion vorzunehmen oder die Daten auf sonstige Weise zu missbrauchen. Kassen, die für eine Kreditkartenzahlung beziehungsweise eine EC-Kartenzahlung geeignet sind, bedürfen daher einer gesonderten Zulassung. Das Kassensystem darf nur zugelassene Kassen aufweisen. Hierdurch soll die Sicherheit des Bezahlens mit Kreditkarte beziehungsweise EC-Karte gewährleistet werden. Die Zulassung der Kasse beziehungsweise des Kassensystems ist gemäß PCI DSS genormt (Payment Card Industry Data Security Standard des PCI Data Security Standard Council, USA). Damit eine Zahlung auf Basis einer Transaktion wie einem Kauf einer Ware oder Dienstleistung durchgeführt und eine Zahlung an einen Zahlungsempfänger, in der Regel der Lieferant der Ware oder der Erbringer der Dienstleistung, veranlasst beziehungsweise ausgeführt wird, muss das Kassensystem entsprechend dieser Norm für eine bargeldlose Zahlung zugelassen sein. Ansonsten kann das zahlende Institut die Zahlung zum Nachteil des Zahlungsempfängers verweigern.

Der Payment Card Industry Data Security Standard ist ein Regelwerk im Zahlungsverkehr, das sich auf die Abwicklung von insbesondere kreditkartenbasierten Zahlungstransaktionen bezieht und von allen wichtigen Kreditkartenorganisationen unterstützt wird.

Handelsunternehmen, Dienstleister und dergleichen, die kreditkartenbasierte Zahlungstransaktionen speichern, übermitteln oder abwickeln, müssen die durch den PCI DSS vorgegebenen Regelungen erfüllen. Halten sie sich nicht daran, können Strafgebühren verhängt, Einschränkungen ausgesprochen, oder ihnen letztlich die Akzeptanz von Kreditkarten beziehungsweise EC-Karten untersagt werden. Insbesondere müssen deren Kassensysteme diesen Regelungen genügen.

Die Regelungen umfassen Anforderungen an die Kassensysteme der vorgenannten Verwender, beispielsweise der Unternehmen. Insbesondere sind diesbezüglich der Schutz der gespeicherten Daten von Karteninhabern beziehungsweise Nutzern der Karten, die verschlüsselte Übertragung sensibler Daten von Karteninhabern in öffentlichen Rechnernetzen, Einschränken von Datenzugriffen auf das Notwendige, Beschränkung des physikalischen Zugriffs auf Daten von Karteninhabern, Protokollieren und Prüfen aller Zugriffe auf Daten von Karteninhabern, regelmäßige Prüfungen aller Sicherheitssysteme und -prozesse sowie das Einführen und das Einhalten von Richtlinien in Bezug auf Informationssicherheit zu nennen.

Ein zugelassenes Kassensystem kann in der Regel dadurch erreicht werden, dass die im Kassensystem verwendeten Komponenten wie die Kasse oder dergleichen zugelassen sind. Das zugelassene Kassensystem wird also vorzugsweise aus zugelassenen Komponenten gebildet.

Die spezielle Zulassung einer Kasse für die Zahlung mittels Kreditkarte beziehungsweise EC-Karte, auch Zertifizierung genannt, ist zeit- und kostenaufwändig. Sie wird daher in der Regel nur für Kassen mit einer entsprechenden hohen Stückzahl in der Fertigung durchgeführt. Kundenspezifische Sonderanfertigungen von Kassen werden deshalb aus Kostengründen in der Regel vermieden.

Der Erfindung liegt die **Aufgabe** zugrunde, ein gattungsgemäßes Kassensystem beziehungsweise Verfahren zur bargeldlosen Zahlung derart weiterzubilden, dass die Flexibilität insbesondere im Hinblick auf kundenspezifische Ausführungen einer Kasse erhöht werden kann.

Kassensystemseitig schlägt die Erfindung als **Lösung** vor, dass das Kassensystem eine Verschlüsselungseinheit, mittels der von der Leseeinheit an die Kasse zu übermittelnde Daten verschlüsselt werden, so dass die Daten in der Kasse zumindest teilweise informationstechnisch geschützt vorliegen, sowie eine Entschlüsselungseinheit aufweist, mittels der verschlüsselte, von der Kasse an eine Zentrale weiterzuleitende Daten entschlüsselt werden.

Durch die Verschlüssungseinheit wird erreicht, dass kartenbezogene Daten des Lesegerätes in der Kasse nicht im Klartext lesbar vorhanden sind, so dass auch eine Manipulation dieser Daten weitgehend verhindert werden kann. Informationstechnisch geschützt in Sinne der Erfindung bedeutet, dass die Daten für unberechtigte Dritte nicht lesbar und/oder vorzugsweise nicht manipulierbar sind, das heißt unter anderem, nicht im Klartext vorhanden sind. Ferner sind die Daten vorzugsweise vor Manipulation geschützt, so dass ein Missbrauch der Daten erschwert ist. Zumindest liegen die Daten in einer Form vor, dass eine Manipulation nicht unerkannt vorgenommen werden kann. Insbesondere ist wenigstens der Teil der Daten informationstechnisch geschützt, der personenbezogene beziehungsweise nutzerbezogene Daten umfasst, wie es beispielsweise in der oben genannten Norm angegeben ist. Dies erlaubt es, als Kasse für die vorgesehene bargeldlose Zahlung auch eine nicht zugelassene Kasse zu verwenden, da die von der Leseeinheit an die Kasse übermittelten Daten durch die Verschlüsselung geschützt sind. Eine aufwändige Zulassung der Kasse kann dadurch vermieden werden. Darüber hinaus kann die Kasse durch eine beliebige andere Kasse ersetzt werden, ohne dass die an die Datensicherheit gestellten Anforderungen verletzt werden würden. Die Zulassung des Kassensystems wird dadurch nicht beeinträchtigt. Hierdurch ergibt sich ein Vorteil nicht nur hinsichtlich der Flexibilität sondern auch im Falle einer Störung, indem beispielsweise eine defekte Kasse durch eine beliebige andere für das Kassensystem geeignete Kasse ersetzt werden kann, ohne das letztere eine Zulassung für eine Kartenzahlung benötigen würde. Die Daten können vollständig oder auch wenigstens teilweise verschlüsselt beziehungsweise entschlüsselt werden. Vorzugsweise werden genau die an die Kasse verschlüsselt übergebenen Daten bei der Weiterleitung wieder entschlüsselt. Dies erlaubt es, die Verschlüsselung auf den Teil der Daten zu begrenzen, der als besonders schutzwürdig angesehen wird. Bei einer Kreditkarte kann vorgesehen sein, dass die PAN (Primary Account Number) verschlüsselt wird. Beim Speichern der PAN, beispielsweise in der Kasse, kann ferner die Verschlüsselung des Namens des Karteninhabers, eines Servicecodes und/oder des Ablaufdatums vorgesehen sein, wenn diese mit der PAN gespeichert werden sollen. Natürlich kann die Erfindung auch mit einer zugelassenen Kasse zum Einsatz kommen. Die Kasse des Kassensystems kann eine in konventioneller Weise manuell betätigbare Kasse sein und sowohl zur Bargeldzahlung als auch zur bargeldlosen Zahlung eingerichtet sein. Die Kasse dient insbesondere dazu, den Kaufpreis zu kassieren, das heißt, diesen vorzugsweise für den Betreiber, Inhaber, Verwender des Kassensystems oder dergleichen der Kasse in Empfang zu nehmen. Natürlich kann die Kasse auch eine automatische Kasse sein, wie sie beispielsweise bei Verkaufsautomaten zum Einsatz kommt.

Durch das Zusammenwirken der Verschlüsselungseinheit und der Entschlüsselungseinheit ist die Zulassung des Kassensystems - anders als beim Stand der Technik - nicht betroffen, wenn die Kasse über keine eigene Zulassung verfügt. Durch die Verschlüsselungseinheit kann nämlich sichergestellt werden, dass die Daten, insbesondere der zu schützende Teil der Daten, entsprechend unter Einhaltung der vorgeschriebenen Normung verarbeitet werden können. Deshalb braucht die Kasse bei der Erfindung nicht für den bargeldlosen Zahlungsverkehr eingerichtet zu sein, weshalb sie auch keine Zulassung beziehungsweise Zertifizierung benötigt.

Das Kassensystem ist vorzugsweise modular aufgebaut, so dass einzelne Einheiten wie insbesondere einzelne oder mehrere Kassen, Leseeinheiten und/oder der dergleichen im Wesentlichen beliebig zum Kassensystem zusammengestellt werden können. Insbesondere kann die Leseeinheit separat zur Kasse ausgebildet sein, wodurch sich das Kassensystem der Erfindung besonders für eine Nachrüstung bei einem bisher nicht zugelassenen Kassensystem eignet. Die Leseeinheit wird in diesem Fall einfach unter Zwischenschaltung der Verschlüsselungseinheit an eine Kasse des Kassensystems angeschlossen.

Die Verschlüsselungseinheit kann als Teil der Kommunikationsverbindung ausgebildet sein. Die Kommunikationsverbindung kann eine drahtlose Kommunikationsverbindung, insbesondere eine Funkverbindung, vorzugsweise eine Nahfunkverbindung, eine leitungsgebundene Kommunikationsverbindung, beispielsweise auch eine Telefonverbindung, oder auch eine Kombination hiervon sein. Die Kommunikationsverbindung kann auch einen vorzugsweise mobilen Speicher aufweisen, beispielsweise einen Datenträger wie CD-ROM, Magnetband oder dergleichen. Die Verschlüsselungseinheit kann beispielsweise an einem der Enden der Kommunikationsverbindung angeordnet sein. Sie kann aber auch in die Leseeinheit oder bei einem Anschluss der Kommunikationsverbindung an der Kasse selbst angeordnet sein. Die Verschlüsselungseinheit kann durch eine separate Baugruppe gebildet sein, die an der gewünschten Stelle zwischengeschaltet werden kann. So kann die Verschlüsselungseinheit zum Beispiel in eine leitungsgebundene Kommunikationsverbindung eingeschleift sein. Die Verschlüsselungseinheit kann hierfür ein eigenes Gehäuse aufweisen. Sie kann aber auch in ein Gehäuse der Kasse oder des Lesegerätes integriert sein. Die Verschlüsselungseinheit kann ferner von der Kasse und/oder der Leseeinheit mit elektrischer Energie versorgt werden, damit eine in der Verschlüsselungseinheit angeordnete Verschlüsselungsbaugruppe bestimmungsgemäß betrieben werden kann. Die Verschlüsselungseinheit kann auch eine eigene Energieversorgung, beispielsweise in Form eines Netzteiles, einer Batterie oder dergleichen umfassen.

Verschlüsselung im Sinne der Erfindung bedeutet ein Vorgang, bei dem eine lesbare Information, beispielsweise eine Zeichenfolge, vorzugsweise digitale Daten, in eine nicht einfach interpretierbare Zeichenfolge umgewandelt wird. Die Verschlüsselung selbst kann anhand eines mathematischen Verfahrens durchgeführt werden, welches einen sogenannten Schlüssel verwendet. Das wissenschaftliche Forschungsgebiet, dass sich mit der Frage der Verschlüsselung beschäftigt ist die Kryptographie. Der umgekehrte Vorgang, die nicht einfach interpretierbare Zeichenfolge wieder in eine lesbare Zeichenfolge beziehungsweise eine lesbare Information zurückzuwandeln, wird als Entschlüsselung bezeichnet. Auch die Entschlüsselung kann anhand eines mathematischen Verfahrens, beispielsweise unter Zuhilfenahme eines Schlüssels durchgeführt werden. Die mathematischen Verfahren können mittels Algorithmen realisiert sein, die sich als Hardwarelogik, Rechnerprogramm, Kombinationen hiervon oder dergleichen realisieren lassen. Für die Verschlüsselung sowie auch für eine Entschlüsselung können gleiche oder auch unterschiedliche Schlüssel zum Einsatz kommen. Wird für die Verschlüsselung und die Entschlüsselung der gleiche Schlüssel verwendet, so handelt es sich um eine symmetrische Verschlüsselungsmethode. Werden unterschiedliche Schlüssel für die Ver- und Entschlüsselung verwendet, handelt es sich um eine asymmetrische Verschlüsselungsmethode. Entschlüsselung bedeutet dabei, dass ein berechtigter Empfänger der verschlüsselten Information mit Hilfe eines in seinem Besitz befindlichen Schlüssels die verschlüsselte Information in eine lesbare Information zurückwandeln kann. Dagegen wird mit Entzifferung der Vorgang bezeichnet, dass ein unberechtigter Dritter, der nicht im Besitz des zugehörigen Schlüssels ist, versucht, die verschlüsselte Information in eine lesbare Information zurückwandeln. Die Verschlüsselung von einer Information dient somit der Informationssicherheit, so dass die zu übermittelnde Information vorzugsweise ausschließlich von einem berechtigten Empfänger gelesen werden kann, so dass nur er über die tatsächliche Information Kenntnis erlangt. Insbesondere soll der Empfänger in der Lage sein festzustellen, ob die Information nach ihrer Erzeugung verändert worden ist. Der Begriff Schlüssel bezieht sich somit nicht auf den gleichnamigen Schlüssel, der der Betätigung eines Schlosses dient, sondern auf eine Zeichenfolge beziehungsweise Information, mit der anhand eines Verbeziehungsweise Entschlüsselungsverfahrens eine Information geschützt oder auch eine geschützte Information wieder lesbar beziehungsweise ungeschützt gemacht werden kann.

Die Verschlüsselung beziehungsweise Entschlüsselung ist grundsätzlich zu unterscheiden von Codierungsverfahren, wie sie in der Nachrichtentechnik zur Quellen- beziehungsweise Kanalcodierung verwendet werden. Diese Art der Codierungen dienen nämlich im Unterschied zur Verschlüsselung nicht dazu, die Information bezüglich der Informationssicherheit zunächst unlesbar zu machen, sondern vielmehr dazu, eine Information über einen vorgegebenen Informationsübertragungskanal übertragen zu können. Die Quellencodierung nimmt hierfür eine grundsätzliche Anpassung der Quelle an ein Quellenmedium vor, wohingegen die Kanalcodierung dazu dient, eine gegebenenfalls quellencodierte Information durch eine weitere Codierung nämlich die Kanalcodierung an den Informationskanal so anzupassen, dass sie über den Informationskanal übertragbar ist. Vorzugsweise soll eine möglichst hohe Kanalkapazität genutzt werden können. Gleichwohl bleibt bei diesen Codierungsverfahren die Information stets für Dritte lesbar. Ein Schlüssel, insbesondere ein geheimer Schlüssel, der nur berechtigten Informationsempfängern zur Verfügung steht, ist bei diesen Codierungsverfahren nicht vorgesehen (siehe Steinbuch, Rupprecht, Nachrichtentechnik, Band II, 3. Auflage, Springer-Verlag, 1982).

Der Schlüssel gemäß der Erfindung enthält die Information, die erforderlich ist, die zu übermittelnde Information in eine nicht einfach interpretierbare Information beziehungsweise Zeichenfolge umzuwandeln beziehungsweise wieder zurückzuwandeln. Der Schlüssel kann somit Daten umfassen, beispielsweise digitale Daten, die gemäß eines vorgegebenen Verfahrens auf die zu verschlüsselnde beziehungsweise zu entschlüsselnde Information angewendet wird. Darüber hinaus kann der Schlüssel auch Informationen über anzuwendende Verfahren bei der Verschlüsselung beziehungsweise Entschlüsselung enthalten.

Die Erfindung ermöglicht es somit, die von der Leseeinheit an die Kasse übermittelten Daten durch die Verschlüsselung in der Kasse sicherheitstechnisch zu schützen. Deshalb kann im Unterschied zum Stand der Technik die Kasse auch durch eine nicht zugelassene Kasse gebildet sein, weil aufgrund der Verschlüsselung der von der Leseeinheit übermittelten Daten ein Zugriff auf diese Daten weitgehend vermieden werden kann. Die für eine Zulassung beziehungsweise Zertifizierung erforderliche Datensicherheit wird somit durch die Verschlüsselungseinheit gewährleistet. Natürlich kann vorgesehen sein, dass an die Verschlüsselungseinheit beziehungsweise auch an die Entschlüsselungseinheit entsprechende sicherheitstechnische Anforderungen gestellt werden, die es Dritten im Wesentlichen unmöglich machen, Zugriff auf die Verschlüsselung und auf die Daten zu erhalten.

Die Zentrale ist beispielsweise die Kreditkartenzentrale und/oder die EC-Kartenzentrale. Die Zentrale kann durch mehrere kartenspezifische Institute gebildet sein. Insbesondere kann die Zentrale die Validität des bargeldlosen Zahlungsmittels prüfen und - auf Anfrage - ein Gültigkeitssignal oder ein Ungültigkeitssignal zurückliefern. Das Gültigkeitssignal beziehungsweise das Ungültigkeitssignal kann von der Kasse ausgewertet und zur Freigabe oder Nichtfreigabe einer Zahlungstransaktion mittels des bargeldlosen Zahlungsmittels verwendet werden. Die Zentrale kann die Zahlung an den Zahlungsempfänger, vorzugsweise zu Lasten eines Inhabers beziehungsweise Nutzers des bargeldlosen Zahlungsmittels veranlassen.

Gemäß einem Vorschlag der Erfindung kann die Verschlüsselungseinheit und/oder die Entschlüsselungseinheit eine separate Baugruppe sein. Die separate Baugruppe kann ein eigenes Gehäuse aufweisen. Sie kann aber auch in einem Gehäuse der Kasse oder gegebenenfalls der Leseeinheit integriert angeordnet sein. Vorzugsweise ist die separate Baugruppe in eine Kommunikationsverbindung zwischen der Leseeinheit und der Kasse beziehungsweise zwischen der Kasse und der Zentrale eingeschleift. Sie kann eine eigene Energieversorgung aufweisen, beispielsweise in Form eines Netzteiles, einer Batterie, Kombinationen hiervon oder dergleichen. Die Verschlüsselungseinheit und die Entschlüsselungseinheit können auch in einem gemeinsamen Gehäuse angeordnet sein,

Es kann vorgesehen sein, dass die Verschlüsselungseinheit in der Kasse oder in der Leseeinheit angeordnet ist. Die Verschlüsselungseinheit kann somit als separate Baugruppe in einem Gehäuse der Kasse oder der Leseeinheit angeordnet sein. Vorzugsweise befindet sich die Verschlüsselungseinheit in der Kasse beziehungsweise in der Leseeinheit an der Stelle, an der die Daten in die Kommunikationsverbindung eingespeist beziehungsweise von der Kommunikationsverbindung erhalten werden. So kann beispielsweise vorgesehen sein, dass die Verschlüsselungseinheit in einer Leseeinheit einen Anschluss für die Kommunikationsverbindung, beispielsweise ein Kommunikationskabel oder dergleichen aufweist. Ist die Verschlüsselungseinheit dagegen in der Kasse angeordnet, kann ebenfalls vorgesehen sein, dass sie zum Anschluss der Kommunikationsverbindung ausgebildet ist. Dadurch kann der geschützte Datenverkehr sichergestellt werden.

Daten können unter anderem insbesondere kartenbezogene Nutzerdaten wie die PAN einer Kreditkarte, der Name des Karteninhabers, Ablaufdatum der Karte oder dergleichen sein. Neben der Verschlüsselung können ausgewählte Daten zumindest teilweise auch als Hash-Wert erzeugt, angelegt und/oder mit verschlüsselten Daten verknüpft werden. Hierdurch kann eine Nachverfolgbarkeit von verschlüsselten Datenpakten innerhalb des Kassensystems erreicht werden. Ein Hash-Wert kann vorzugsweise ein eindeutiger, nicht rückrechenbarer Algorithmus sein, der auf Basis der Daten, insbesondere der Nutzerdaten erzeugt werden kann.

Darüber hinaus können während einer Verschlüsselung Datenfelder erzeugt beziehungsweise angelegt werden, in denen maskiert Nutzerdaten gespeichert werden können. Hierdurch lässt sich erreichen, dass die maskierten Nutzerdaten soweit unkenntlich sind, dass eine missbräuchliche Nutzung weitgehend vermieden werden kann. So kann vorgesehen sein, dass beispielsweise nur die vier letzten Stellen einer Kreditkartennummer als maskierte Daten gespeichert werden.

Ferner kann das Kassensystem eine Entschlüsselungseinheit aufweisen. Die Entschlüsselungseinheit dient dazu, die verschlüsselten Daten beziehungsweise Informationen wieder in eine lesbare beziehungsweise ungeschützte Form zurückzuwandeln. Diese können dann in konventioneller Weise beispielsweise über eine Telefonverbindung oder dergleichen an eine Zentrale übermittelt werden, um eine Zahlungstransaktion durchzuführen. Es kann natürlich auch vorgesehen sein, dass die Entschlüsselungseinheit in der Kommunikationsverbindung von der Kasse zur Zentrale beziehungsweise auch in der Zentrale selbst angeordnet ist. Hierdurch kann ein Datenschutz zumindest teilweise auch in der Kommunikationsverbindung zwischen Kasse und Zentrale weiter erhöht werden. Die Kommunikationsverbindung kann wie die zwischen Leseeinheit und Kasse ausgebildet sein.

Eine Ausgestaltung sieht vor, dass die Entschlüsselungseinheit in der Kasse angeordnet ist. Vorzugsweise ist sie derart angeordnet, dass an ihr die Kommunikationsverbindung zur Zentrale angeschlossen werden kann. Dadurch kann erreicht werden, dass innerhalb der Kasse die Daten im Wesentlichen nur in verschlüsselter Form vorliegen, so dass unberechtigte Manipulationen und/oder Missbrauch der Daten weitgehend vermieden werden können.

Ferner kann die Verschlüsselungseinheit und/oder die Entschlüsselungsseinheit einen Datenträger mit einem Schlüssel aufweisen. Der Datenträger kann beispielsweise durch eine Speicherkarte, eine Smartcard, eine Chipkarte oder dergleichen gebildet sein. Der Datenträger trägt den Schlüssel zur Durchführung der Verschlüsselung beziehungsweise Entschlüsselung. Vorzugsweise ist der Datenträger austauschbar, so dass der Schlüssel in regelmäßigen, insbesondere vorgebbaren Zeitabständen änderbar ist. Die Verschlüsselungseinheit und/oder die Entschlüsselungseinheit können beispielsweise einen Kartenleser für einen kartenförmigen Datenträger aufweisen, der einen Einschubschlitz für den Datenträger aufweist.

Darüber hinaus kann vorgesehen sein, dass die Verschlüsselungseinheit und/oder die Entschlüsselungseinheit eine Kommunikationseinrichtung aufweist. Die Kommunikationseinrichtung kann zum Beispiel eine leitungsgebundene Kommunikationsverbindung, beispielsweise eine Telefonverbindung oder dergleichen sein. Sie kann aber auch durch eine Funkverbindung, zum Beispiel eine Mobilfunkverbindung im GSM-Netz oder dergleichen gebildet sein. Dies erlaubt es, die Verschlüsselungseinheit beziehungsweise Entschlüsselungseinheit mit einer Schlüsselausgabestelle zu verbinden, die einen Schlüssel für die Ver- beziehungsweise Entschlüsselung vorgeben kann. Die Schlüsselausgabeeinrichtung kann ferner den Schlüssel zu vorgebbaren Zeitpunkten beziehungsweise Ereignissen erneuern beziehungsweise ändern. Darüber hinaus kann vorgesehen sein, dass ein Schlüssel, der ein Verfallskriterium enthält, beispielsweise eine bestimmte Nutzungsdauer oder eine bestimmte Anwendungshäufigkeit vorzugsweise automatisch bedarfsgerecht erneuert wird.

Mit der Erfindung wird ferner ein gattungsgemäßes Verfahren vorgeschlagen, wobei die Daten an die Kasse verschlüsselt übergeben und bei einer Weiterleitung von der Kasse an eine Zentrale entschlüsselt werden, so dass die Daten in der Kasse zumindest teilweise informationstechnisch geschützt vorliegen. Die Übergabe erfolgt vorzugsweise von der Leseeinheit. Die verschlüsselte Übergabe der Daten an die Kasse ermöglicht es, dass die Kasse selbst Änderungen an den Daten nicht vornehmen kann. Die Daten sind in der Kasse im Wesentlichen ausschließlich geschützt vorhanden. Hierdurch wird ermöglicht, dass für die Durchführung einer bargeldlosen Zahlung auch eine Kasse ohne Zulassung für die Durchführung von kartenbasierten Zahlungstransaktionen zum Einsatz kommen kann, die nicht für diese Anwendung üblicherweise zugelassen ist. Die Verschlüsselung der Daten kann zum Beispiel bereits in der Leseeinheit erfolgen. Sie kann aber auch während der Übermittlung an die Kasse beispielsweise an einer bestimmten Stelle der Kommunikationsverbindung erfolgen, an der eine Verschlüsselungseinheit eingeschleift ist. Darüber hinaus kann die Verschlüsselung empfangsseitig an der Kasse erfolgen, und zwar vorzugsweise an der Stelle, an der die Daten die Kasse erreichen. Eine Zuordnung der verschlüsselten Daten kann über Hash-Werte, die aus Nutzerdaten erzeugt wurden aber nicht zurückverfolgbar sind, erreicht werden.

Ferner kann vorgesehen sein, dass die verschlüsselten Daten an die Zentrale mittels einer Entschlüsselungseinheit entschlüsselt übermittelt werden. Somit stehen die Daten der Zentrale in lesbarer Form zur Verfügung. Die Entschlüsselungseinheit kann in eine Kommunikationsverbindung zwischen der Kasse und der Zentrale eingeschleift sein. Sie kann aber auch in der Kasse angeordnet sein, beispielsweise an der Stelle, an der die Kommunikationsverbindung zur Zentrale angeschlossen ist. Dadurch kann die Informationssicherheit bezüglich der Kasse gewährleistet werden. Weiterhin besteht die Möglichkeit, die Entschlüsselungseinheit bei der Zentrale anzuordnen. Dadurch ist auch die Kommunikationsverbindung sicherheitstechnisch mit umfasst.

Eine Ausgestaltung des Verfahrens sieht vor, dass ein Schlüssel der Verschlüsselungseinheit und/oder der Entschlüsselungseinheit aktualisiert wird. Die Aktualisierung kann durch Austauschen oder Ergänzen beziehungsweise ändern des Schlüssels erfolgen. Der Schlüssel kann beispielsweise mittels eines Datenträgers aktualisiert werden, zum Beispiel indem der Datenträger der Verschlüsselungseinheit und/oder der Entschlüsselungseinheit ausgetauscht wird. Vorzugsweise werden die Datenträger der Verschlüsselungseinheit und/oder der Entschlüsselungseinheit gemeinsam ausgetauscht. Natürlich kann der Schlüssel auch ferngesteuert aktualisiert werden, indem beispielsweise eine Schlüsselausgabestelle über eine Kommunikationsverbindung einen aktuellen Schlüssel in die Verschlüsselungseinheit beziehungsweise Entschlüsselungseinheit einspeist. Der vorhergehende Schlüssel kann dann beispielsweise verworfen werden. Darüber hinaus besteht die Möglichkeit, dass mehrere Schlüssel in der Verschlüsselungseinheit und/oder der Entschlüsselungseinheit vorgesehen sind, von denen jeweils einer entsprechend einer Vorgabe verwendet wird. Die Aktualisierung kann somit darin bestehen, den jeweils zu verwendenden Schlüssel auszuwählen. Natürlich können unterschiedliche Verfahren zur Aktualisierung auch miteinander kombiniert werden.

In der Verschlüsselungseinheit und/oder der Entschlüsselungseinheit können mehrere Schlüssel verwendet werden. So kann zum Beispiel vorgesehen sein, dass eine mehrstufige Verschlüsselung vorgesehen ist. Es kann auch vorgesehen sein, dass die Verschlüsselungseinheit die Daten verschlüsselt und den die Daten verschlüsselnden Schlüssel zusätzlich verschlüsselt, wie beispielsweise bei einem asymmetrischen Schlüsselverfahren, und mit den verschlüsselten Daten zusammen übermittelt. Dies hat den Vorteil, dass die Entschlüsselungseinheit bezüglich des Schlüssels nicht aktualisiert zu werden braucht. Die Entschlüsselungseinheit kann aus den erhaltenen Daten den Schlüssel ermitteln und mit dessen Hilfe die empfangenen Daten entschlüsseln. Es kann auch vorgesehen sein, dass die Entschlüsselungseinheit einen sogenannten öffentlichen Schlüssel zum Verschlüsseln ausgibt, der von der Verschlüsselungseinheit verwendet wird, um die Daten zu verschlüsseln. Ein Entschlüsseln kann dann nur durch einen geheimen Schlüssel der Entschlüsselungseinheit erfolgen. Natürlich kann auch eine Kaskadierung von Verschlüsselungsverfahren mit unterschiedlichen Schlüsseln vorgesehen sein.

Weiterhin kann vorgesehen sein, dass die Schlüssel gewechselt werden. Der Wechsel der Schlüssel kann zum Beispiel durch Wechseln des Datenträgers erreicht werden. Es kann aber auch vorgesehen sein, dass der Wechsel lediglich die Verwendung eines anderen Schlüssels umfasst.

Die Verwendung eines Schlüssels kann gesperrt werden. Dies kann beispielsweise dann vorteilhaft sein, wenn die ernstzunehmende Gefahr besteht, dass der Schlüssel zur Verschlüsselung der Daten unberechtigten Dritten bekannt geworden sein könnte. Darüber hinaus kann ein Sperren des Schlüssels nach einer vorgebbaren Anzahl der Nutzung beziehungsweise auch durch Zeitablauf vorgegeben sein. Ein gesperrter Schlüssel kann lediglich für die Verschlüsselung gesperrt sein, so dass bereits verschlüsselte Daten mit dem gesperrten Schlüssel noch entschlüsselt werden können. Insofern kann die Sperrung des Schlüssels für die Verschlüsselungseinheit beziehungsweise Entschlüsselungseinheit unterschiedlich erfolgen.

Eine weitere Ausgestaltung sieht vor, dass der Schlüssel von der Zentrale und/oder einer Schlüsselausgabestelle an die Verschlüsselungseinheit und/oder die Entschlüsselungseinheit übermittelt wird. Hierfür kann ein separater Kommunikationskanal vorgesehen sein. Anstelle der Zentrale kann das Übermitteln des Schlüssels auch von der Schlüsselausgabestelle erfolgen. Die Schlüsselausgabestelle kann ein Trustcenter oder dergleichen sein, die eine zuverlässige Ausgabe eines geheimen Schlüssels gewährleisten kann. Die Übermittlung kann drahtlos, mittels Datenträger und/oder auch leitungsgebunden erfolgen.

Eine vorteilhafte Weiterbildung sieht vor, dass der Schlüssel von der Verschlüsselungseinheit oder der Entschlüsselungseinheit an die jeweils andere Einheit übermittelt wird. Dadurch kann erreicht werden, dass der Schlüssel lediglich bei der Verschlüsselungseinheit oder der Entschlüsselungseinheit zu warten ist. Die entsprechende andere Einheit erhält den aktuell gültigen Schlüssel von der gewarteten Einheit. Dadurch kann eine Teilautomatisierung der Aktualisierung des Schlüssels erreicht werden.

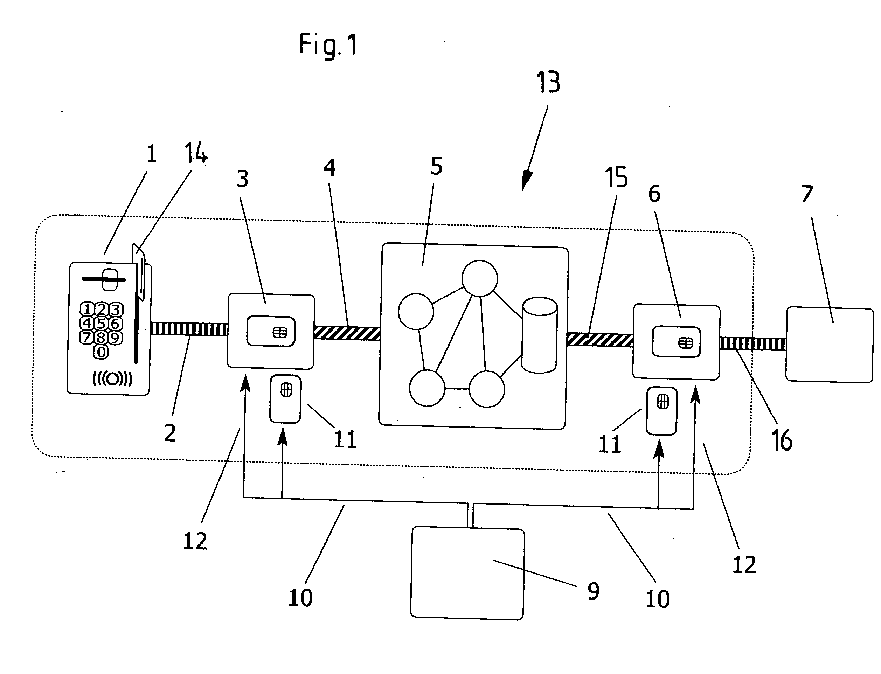

Weitere Vorteile und Merkmale sind der folgenden Beschreibung eines Ausführungsbeispiels zu entnehmen. Im Wesentlichen gleichbleibende Bauteile sind mit gleichen Bezugszeichen bezeichnet. Die Zeichnung ist eine Schemazeichnung und dient lediglich der Erläuterung des folgenden Ausführungsbeispiels.

Es zeigt die einzige Figur schematisch ein Kassensystem der Erfindung.

Aus der Figur ist ein Kassensystem 13 ersichtlich, welches für die Durchführung einer bargeldlosen Zahlungstransaktion mittels einer Kreditkarte 14 als bargeldlosem Zahlungsmittel eingerichtet ist. Die Kreditkarte enthält unter anderem karten- sowie nutzerspezifische Daten als Teil von transaktionsrelevanten Daten, im folgenden Nutzerdaten genannt. Die transaktionsrelevanten Daten umfassen in dieser Ausgestaltung ferner Daten wie Kaufpreis, Boni und/oder dergleichen.

Das Kassensystem 13 weist als Kasse eine Datenverarbeitungseinheit 5 sowie ein mit der Datenverarbeitungseinheit 5 über eine Kommunikationsverbindung 2, 4 verbundenes Kartenlesegerät 1 als Leseeinheit für die Kreditkarte 14 auf. Die Kommunikationsverbindung 2, 4, die hier als Datenverbindung zwischen dem Kartenlesegerät 1 und der Datenverarbeitungseinheit 5 ausgebildet ist, ist vorliegend zweiteilig als leitungsgebundene Kommunikationsverbindung ausgebildet. Vorliegend sind hierfür Datenkabel vorgesehen. Die beiden Datenverbindungen 2, 4 sind kommunikationstechnisch über ein Sicherheitsmodul 3 zur Verschlüsselung der Nutzerdaten als Verschlüsselungseinheit gekoppelt. Demzufolge sind die durch die Datenverbindung 2 übermittelten Nutzerdaten in Klartext, das heißt, lesbar beziehungsweise ungeschützt, und in der Datenverbindung 4 werden verschlüsselte beziehungsweise geschützte Nutzerdaten übermittelt, die für Dritte nicht lesbar sind. Die von dem Kartenlesegerät 1 aus der Kreditkarte 14 ausgelesenen Nutzerdaten werden über die Datenverbindung 2 im Klarheit an das Sicherheitsmodul 3 zur Verschlüsselung der Nutzerdaten übermittelt, durch das Sicherheitsmodul 3 verschlüsselt und über die Datenverbindung 4 in verschlüsselter Fassung an die Datenverarbeitungseinheit 5 übermittelt. Ein Umfang der Verschlüsselung kann durch das Sicherheitsmodul 3 festgelegt werden. Es können sowohl sämtliche aus der Kreditkarte 14 ausgelesenen Nutzerdaten oder eine Teilmenge hiervon zur Verschlüsselung vorgesehen sein. In der Datenverarbeitungseinheit 5 liegen somit zumindest teilweise, beziehungsweise ausschließlich verschlüsselte Nutzerdaten vor. Die Nutzerdaten werden an die Datenverarbeitungseinheit 5 somit verschlüsselt übergeben. Die Datenverarbeitungseinheit 5 verarbeitet die Nutzerdaten sowie die für die Zahlungstransaktion erforderlichen Daten und übermittelt diese über eine Datenverbindung 15, 16 an eine Autorisierungsstelle 7 als Zentrale. Die Datenverbindung 15, 16 ist ebenfalls zweiteilig als leitungsgebundene Kommunikationsverbindung ausgebildet. Die beiden Teile der Datenverbindung 15, 16 sind über ein Sicherheitsmodul 6 zur Entschlüsselung der Nutzerdaten als Entschlüsselungseinheit miteinander in kommunikationstechnischer Verbindung. Verschlüsselte Nutzerdaten, die von der Datenverarbeitungseinheit 5 an die Autorisierungsstelle 7 übermittelt werden, gelangen zunächst über die Datenverbindung mit verschlüsselten beziehungsweise geschützten Nutzerdaten 15 zum Sicherheitsmodul zur Entschlüsselung der Nutzerdaten 6, wo sie entschlüsselt werden. Von dort werden sie in entschlüsselter beziehungsweise ungeschützter Fassung über die Datenverbindung mit Nutzerdaten in Klartext 16 an die Autorisierungsstelle 7 übermittelt. Die Autorisierungsstelle 7 erhält somit die Nutzerdaten in Klartext und kann somit die Autorisierung in bestimmungsgemäßer Weise vornehmen. Die Datenverbindung 15, 16 ist vorliegend durch eine Telefonverbindung gebildet.

Gemäß dem erfindungsgemäßen Verfahren zur bargeldlosen Zahlung an einer Kasse, hier in Form der Datenverarbeitungseinheit 5, eines Kassensystems 13 steht das Kartenlesegerät 1 für die Kreditkarte 14 mit der Datenverarbeitungseinheit 5 in Kommunikationsverbindung, wobei das Kartenlesegerät 1 zwecks Durchführung einer Zahlungstransaktion in Kommunikationsverbindung mit der Kreditkarte 14 tritt, Daten von der Kreditkarte 14 eingelesen und an die Datenverarbeitungseinheit 5 übermittelt werden. Die Daten werden an die Datenverarbeitungseinheit 5 verschlüsselt übergeben, indem sie vor Übergabe an die Datenverarbeitungseinheit 5 mittels des Sicherheitsmoduls 3 verschlüsselt werden. Die verschlüsselten Daten werden im Anschluss an die Zentrale 7 mittels des Sicherheitsmoduls 6 zur Entschlüsselung der Nutzerdaten entschlüsselt übermittelt.

Der Schlüssel zum Verschlüsseln beziehungsweise Entschlüsseln der Nutzerdaten wird bei den Sicherheitsmodulen 3, 6 über zwei Wege alternativ bereitgestellt. Ein Weg ist dadurch gebildet, dass die Sicherheitsmodule 3, 6 über eine Online-Verbindung 12 zu einem Trust-Center 9 als Schlüsselausgabestelle in Kommunikationsverbindung stehen. Eine alternative Kommunikationsverbindung ist dadurch gebildet, dass eine Chipkarte 11 als Datenträger mit dem Schlüssel vom Trust-Center 9 versehen wird und den Sicherheitsmodulen 3, 6 zwecks Einlesen des Schlüssels angekoppelt wird. Hierfür kann eine nicht näher dargestellte Leseeinheit des Sicherheitsmoduls 3, 6 dienen. Im Fall der Chipkarte 11 ist hier vorgesehen, dass der Schlüssel selbst auf der Chipkarte 11 während des Vorgangs des Verschlüsselns beziehungsweise Entschlüsselns verbleibt. Somit kann ein Zugriff auf den Schlüssel für Dritte erschwert werden.

In regelmäßigen Zeitabständen wird der Schlüssel entweder über die Online-Verbindung 12 oder durch Wechsel der Chipkarte 11 aktualisiert. Je nach Art des Schlüsselverfahrens kann ein symmetrischer oder auch ein asymmetrischer Schlüssel vorgesehen sein. Bei einem asymmetrischen Schlüssel weisen die Chipkarten 11 der Sicherheitsmodule 3, 6 unterschiedliche Schlüssel auf, beziehungsweise werden unterschiedliche Schlüssel an die Sicherheitsmodule 3, 6 übermittelt.

Das System der Erfindung eignet sich insbesondere für eine bargeldlose Zahlung mittels einer Bezahlkarte, einer Kreditkarte oder dergleichen, wie es zum Beispiel bei Tankstellen, Parkhäusern, Freizeitanlagen, Fahrscheinautomaten oder dergleichen vorliegt. Dabei ist das Kassensystem 13 nicht auf dem Einsatz konventioneller, manuell betätigbarer Kassen beschränkt, sondern es kann insbesondere auch bei Verkaufsautomaten zum Einsatz kommen. Dabei kann die Kasse durch eine Datenverarbeitungseinheit, wie oben beschrieben, gebildet sein.

Das Verfahren der Erfindung gewährleistet, dass sensible Kartendaten verarbeitet werden können, ohne dass die Kasse beziehungsweise Datenverarbeitungseinheit einer Zulassung bedarf beziehungsweise einer Zertifizierung unterliegt. Dadurch kann das Kassensystem besonders flexibel an einen Kundenbedarf angepasst werden, ohne dass eine separate Zulassung oder Zertifizierung für ein solches kundenspezifisches Kassensystem erforderlich wäre. Eine derartige Zulassung beziehungsweise Zertifizierung wäre dagegen erforderlich, wenn Kartendaten in Klartext von der Kasse verarbeitet werden würden. Dies vereinfacht die Entwicklung von Systemen zur bargeldlosen Zahlung. Die Ver- und Entschlüsselungseinheit beziehen ihre Schlüssel vorteilhaft von Anbietern als Schlüsselausgabestellen wie beispielsweise sogenannten Trust-Centern. Die Schlüssel können auf chipkartenförmigen Datenträgern, sogenannten SAM-Modulen vorliegen. Derartige SAM-Module werden als sicherer Aufbewahrungsort für einen Schlüssel angesehen. Das Einspielen neuer Schlüssel in die Verschlüsselungsbeziehungsweise Entschlüsselungseinheit kann sowohl durch Austausch von SAM-Modulen als auch Online erfolgen.

Möchte nun ein Nutzer des Kassensystems 13, beispielsweise ein Kunde, mit seiner Kreditkarte eine Zahlung durchführen, kann dies sowohl an einer bedienten Kasse als auch bei einem Verkaufsautomaten durchgeführt werden. Zur Zahlung nutzt der Kunde das Kartenlesegerät 1. Dieses Kartenlesegerät 1 sendet im Normalfall dann zahlungsrelevante, sensible Nutzerdaten über die Datenverbindung 2, 4 an die Datenverarbeitungseinheit 5 beziehungsweise Kasse, die dort verarbeitet werden und an eine Autorisierungsstelle 7 verschickt werden. Durch das Sicherheitsmodul 3 werden diese Daten erkannt und verschlüsselt beziehungsweise durch das Sicherheitsmodul 6 wieder entschlüsselt. Somit kann im vorliegenden Ausführungsbeispiel die Datenverarbeitungseinheit 5 beziehungsweise Kasse Zahlungsvorgänge bearbeiten, ohne dass sich zu irgendeinem Zeitpunkt nutzbare, sensible Nutzerdaten innerhalb der Datenverarbeitungseinheit 5 beziehungsweise Kasse befinden, die dritten Personen unerlaubte Transaktionen oder auch Zugriff auf die Daten ermöglichten. Die Chipkarten 11 sind Datenträger, die die zur Verschlüsselung notwendigen Schlüssel beinhalten und von dem Trust-Center 9 beschafft werden. Diese verbleiben in den Sicherheitsmodulen 3, 6 für die bestimmungsgemäße Nutzung des Kassensystems 13. Sie gehören nicht dem Verwender des Kassensystems 13. Im Falle eines Schlüssel-Updates können die vorhandenen Chipkarten 11 gegen neue Chipkarten getauscht werden.

Ein Nutzungsablauf für einen Kunden an einem Verkaufsautomaten kann somit wie folgt aussehen:
- Der Kunde wählt einen Gegenstand aus und möchte diesen mit seiner Kreditkarte 14 bezahlen.
- Einlesen der Kartendaten mittels des Kartenlesegeräts 1 und Übermitteln der Kreditkartendaten an die Kasse 5.
- Erkennung und Verschlüsselung der relevanten Daten im Datenstrom im Sicherheitsmodul 3.
- Weitergabe des gesamten Datenstroms mit teilweise verschlüsselten Datenfeldern an die Kasse 5.
- Verarbeitung und Speicherung der Daten in der Kasse 5.
- Weiterleitung der teilweise verschlüsselten Daten an eine externe Autorisierungsstelle 7 über das Sicherheitsmodul 6.
- Erkennung und Entschlüsselung der verschlüsselten Daten im Datenstrom im Sicherheitsmodul 6 sowie Weitergabe des vollständig entschlüsselten Datenstroms an die Autorisierungsstelle.
- Umgekehrter Verfahrensablauf für relevante Daten, die von der Autorisierungsstelle an das Kassensystem 13 übermittelt werden.

Wie aus dem voranstehenden Verfahrensablauf ersichtlich ist, ist es gemäß der Erfindung nicht zwingend erforderlich, die von der Leseeinheit an die Kasse beziehungsweise von der Kasse an die Zentrale oder umgekehrt zu übergebenden Daten vollständig zu verschlüsseln. Es kann vorgesehen sein, dass lediglich ein Teil der Daten verschlüsselt beziehungsweise entschlüsselt wird. Die zu verschlüsselnden beziehungsweise entschlüsselnden Teile der zu übergebenden Daten können mit einer Kennzeichnung versehen sein, die eine einfache Erkennung für die Sicherheitsmodule ermöglicht, wann eine Ver- beziehungsweise Entschlüsselung vorzunehmen ist. Der Teil der Daten kann zum Beispiel durch personenbezogene Daten gebildet sein.

Das in der Figur dargestellte Ausführungsbeispiel dient lediglich der Erläuterung der Erfindung und ist für diese nicht beschränkend.

### Bezugszeichenliste

- 1: Kartenlesegerät
- 2: Datenverbindung mit Nutzerdaten in Klartext
- 3: Sicherheitsmodul zur Verschlüsselung der Nutzerdaten
- 4: Datenverbindung mit verschlüsselten Nutzerdaten
- 5: Datenverarbeitungseinheit
- 6: Sicherheitsmodul zur Entschlüsselung der Nutzerdaten
- 7: Autorisierungsstelle
- 9: Trust Center
- 10: Kommunikationsverbindung
- 11: Chipkarte
- 12: Online-Verbindung
- 13: Kassensystem
- 14: Kreditkarte
- 15: Datenverbindung mit verschlüsselten Nutzerdaten
- 16: Datenverbindung mit Nutzerdaten in Klartext

## Patentansprüche

1. Kassensystem (13), eingerichtet für die Durchführung einer bargeldlosen Zahlungstransaktion mittels eines bargeldlosen Zahlungsmittels (14), mit einer Kasse (5) sowie mit einer mit der Kasse (5) über eine Kommunikationsverbindung (2, 4) verbundenen Leseeinheit (1) für das bargeldlose Zahlungsmittel (14), **gekennzeichnet durch**
eine Verschlüsselungseinheit (3), mittels der von der Leseeinheit (1) an die Kasse (5) zu übermittelnde Daten verschlüsselt werden, so dass die Daten in der Kasse (5) zumindest teilweise informationstechnisch geschützt vorliegen, sowie eine Entschlüsselungseinheit (6), mittels der verschlüsselte, von der Kasse (5) an eine Zentrale (7) weiterzuleitende Daten entschlüsselt werden.

2. Kassensystem nach Anspruch 1, **dadurch gekennzeichnet, dass** die Verschlüsselungseinheit (3) und/oder die Entschlüsselungseinheit (6) eine separate Baugruppe ist.

3. Kassensystem nach Anspruch 1 oder 2, **dadurch gekennzeichnet, dass** die Verschlüsselungseinheit (3) in der Kasse (5) oder in der Leseeinheit (1) angeordnet ist.

4. Kassensystem nach einem der Ansprüche 1 bis 3, **dadurch gekennzeichnet, dass** die Entschlüsselungseinheit (6) in der Kasse (5) angeordnet ist.

5. Kassensystem nach einem der Ansprüche 1 bis 4, **dadurch gekennzeichnet, dass** die Verschlüsselungseinheit (3) und/oder die Entschlüsselungseinheit (6) einen Datenträger (11) mit einem Schlüssel aufweist.

6. Kassensystem nach einem der Ansprüche 1 bis 5, **dadurch gekennzeichnet, dass** die Verschlüsselungseinheit (3) und/oder die Entschlüsselungseinheit (6) eine Kommunikationseinrichtung aufweist.

7. Verfahren zur bargeldlosen Zahlung an einer Kasse (5) eines Kassensystems (13), wobei eine Leseeinheit (1) für ein bargeldloses Zahlungsmittel (14) mit der Kasse (5) in Kommunikationsverbindung steht, die Leseeinheit (1) zwecks Durchführung einer Zahlungstransaktion in Kommunikationsverbindung mit dem bargeldlosen Zahlungsmittel (14) tritt, Daten von dem Zahlungsmittel (14) eingelesen und an die Kasse (5) übermittelt werden,
**dadurch gekennzeichnet,**
**dass** die Daten an die Kasse (5) verschlüsselt übergeben und bei einer Weiterleitung von der Kasse (5) an eine Zentrale (7) entschlüsselt werden, so dass die Daten in der Kasse (5) zumindest teilweise informationstechnisch geschützt vorliegen.

8. Verfahren nach Anspruch 7, **dadurch gekennzeichnet, dass** ein Schlüssel der Verschlüsselungseinheit (5) und/oder der Entschlüsselungseinheit (6) aktualisiert wird.

9. Verfahren nach einem der Ansprüche 7 oder 8, **dadurch gekennzeichnet, dass** in der Verschlüsselungseinheit (3) und/oder der Entschlüsselungseinheit (6) mehrere Schlüssel verwendet werden.

10. Verfahren nach Anspruch 9, **dadurch gekennzeichnet, dass** die Schlüssel gewechselt werden.

11. Verfahren nach Anspruch 9 oder 10, **dadurch gekennzeichnet, dass** die Verwendung eines Schlüssels gesperrt wird.

12. Verfahren nach einem der Ansprüche 8 bis 11, **dadurch gekennzeichnet, dass** der Schlüssel von der Zentrale (7) und/oder einer Schlüsselausgabestelle (9) an die Verschlüsselungseinheit (3) und/oder die Entschlüsselungseinheit (6) übermittelt wird.

13. Verfahren nach einem der Ansprüche 8 bis 12, **dadurch gekennzeichnet, dass** der Schlüssel von der Verschlüsselungseinheit (3) oder der Entschlüsselungseinheit (6) an die jeweils andere Einheit (3, 6) übermittelt wird.
